# EUROPÄISCHE PATENTSCHRIFT

(11) **EP 4 561 744 B1**
(45) Veröffentlichungstag und Bekanntmachung des Hinweises auf die Patenterteilung: **01.07.2026**
(21) Anmeldenummer: 23751281.9
(22) Anmeldetag: 27.07.2023
(51) Int. Cl.: C08F 2/01, B01J 19/24, C08F 2/10, C08F 14/22, C08F 2/24

(54) **VERFAHREN ZUR HERSTELLUNG VON POLYVINYLIDENFLUORID IN EINEM MEMBRANREAKTOR**
METHOD FOR PRODUCING POLYVINYLIDENE FLUORIDE IN A MEMBRANE REACTOR
PROCÉDÉ DE PRODUCTION DE FLUORURE DE POLYVINYLIDÈNE DANS UN RÉACTEUR À MEMBRANE

(30) Priorität: 28.07.2022 DE 102022118981
(43) Veröffentlichungstag der Anmeldung: 04.06.2025
(73) Patentinhaber: Rheinisch-Westfälische Technische Hochschule (RWTH) Aachen, 52062 Aachen (DE)
(72) Erfinder: HERRMANN, Stefan, 52064 Aachen (DE); WESSLING, Matthias, 52074 Aachen (DE)
(74) Vertreter: Michalski Hüttermann & Partner mbB
(86) Internationale Anmeldenummer: PCT/EP2023/070876
(87) Internationale Veröffentlichungsnummer: WO 2024/023237

(56) Entgegenhaltungen:
- US-A- 5 583 240
- US-A1- 2019 202 983
- US-A1- 2021 362 377

## Beschreibung

Die vorliegende Erfindung betrifft ein Verfahren zum Herstellen von Polyvinylidenfluorid. Die vorliegende Erfindung betrifft insbesondere ein Verfahren, bei dem auf besonders vorteilhafte Weise eine Grenzfläche zwischen gasförmiger Monomerphase und wässriger Reaktionsphase im Rahmen einer Polymerisation von Vinylidenfluorid ermöglicht wird.

Die herkömmliche Polymerisation von Vinylidenfluorid (VDF) zu Polyvinylidenfluorid (PVDF) findet in diskontinuierlich betriebenen Rührkesselreaktoren statt. Das VDF liegt als Monomer gasförmig im Reaktor vor und muss für die Polymerisation in einer wässrigen Phase gelöst werden. Dazu wird eine Phasengrenzfläche zwischen Monomer und wässriger Phase benötigt, die in Rührkesselreaktoren durch Blasenerzeugung mittels eines Rührwerks bereitgestellt wird. Die benötigte Phasengrenzfläche zwischen gasförmigem Monomer und der wässrigen Reaktionsphase wird genauer durch Blasenerzeugung und -zerschlagung erzeugt. Dadurch ist ein hoher mechanischer Energieeintrag mit geringer Effizienz in Bezug auf die Erzeugung der Phasengrenzfläche notwendig.

Da die Löslichkeit des Monomers in Wasser sehr gering ist, ist die Polymerisation stark stofftransportlimitiert und die Phasengrenzfläche ist, neben dem Prozessdruck, die entscheidende Prozessgröße, um diese Limitation zu verringern. Zur Erhöhung der Monomerlöslichkeit in der wässrigen Phase findet die Polymerisation meist bei hohen Drücken von 10 - 300 bar oder auch deutlich darüber statt.

Neben dem zusätzlichen Energieeintrag für die Kompression des Gases kommt es bei Lösungen aus dem Stand der Technik gegebenenfalls auch zu sicherheitsrelevanten Problemen, insbesondere durch große Mengen brennbaren Gases bei hohem Druck und hoher Temperatur innerhalb des Reaktors. Des Weiteren werden zur herkömmlichen Herstellung von PVDF Fluoremulgatoren eingesetzt, die in der Umwelt persistent und gesundheitsschädlich sind. Frühere Emulgatoren wie Perfluoroctansäure (PFOA) sind zwar seit 2020 in der EU verboten, jedoch kommen Ersatzstoffe zum Einsatz, die in der chemischen Struktur nur minimal von Perfluoroctansäure abweichen und ebenfalls als Fluoremulgator potentiell persistent und bioakkumulativ sind.

US 2002/123585 A1 beschreibt ein kontinuierliches Verfahren zur Herstellung von PVDF-Homopolymer oder -Copolymer. Das optionale Comonomer besteht aus einer radikalisch polymerisierten Vinylgruppe und umfasst mindestens ein Fluoratom, eine Fluoralkylgruppe oder eine Fluoralkoxygruppe, die direkt an diese Vinylgruppe gebunden ist. Dieses Dokument bezieht sich auch auf PVDF-Homopolymere, die nach den hier beschriebenen Verfahren hergestellt werden. Hinsichtlich einer Polymerisation von PVDF beschreibt dieses Dokument insbesondere, dass ein Hochdruckprozess von mehr als 300 bar verwendet wird.

DE 10 2020 102 420 A1 beschreibt einen Gas-Flüssig-Reaktor zur blasenfreien Begasung einer Prozessflüssigkeit mit einem Prozessgas, wobei der Reaktor mindestens eine äußere Reaktorhülle, eine Rühreinheit und eine Begasungseinheit mit einer Zuleitung für das Prozessgas in den Reaktor umfasst, wobei die Zuleitung für das Prozessgas in einen ersten Gas-Aufnahmeraum innerhalb des Reaktors endet, welcher gasdicht mit mehreren Membranen ausgesucht aus der Gruppe bestehend aus Diffusions- oder Mikrofiltrationsmembranen, oder Kombinationen mindestens zweier Membrantypen daraus, verbunden ist und das Prozessgas über die Membranen in einen zweiten Gas-Aufnahmeraum innerhalb des Reaktors geführt wird, welcher gasdicht mit den anderen Enden der Membranen verbunden ist. Beide Gas-Aufnahmeräume sind konzentrisch zur Rührachse der Rühreinheit ausgestaltet und mechanisch miteinander verbindbar, wobei die Gas-Aufnahmeräume und die zwischen diesen angeordneten Membranen im Wesentlichen einen Zylindermantel innerhalb des Reaktors ausbilden und die Anordnung der Membranen bezogen auf die Rührachse ausgesucht ist aus der Gruppe bestehend aus orthogonal-konzentrisch oder axial-konzentrisch. Ein derartiger Reaktor wird verwendet zur Versorgung von Bakterien in einem Nährmedium mit Sauerstoff.

US 5 583 240 A offenbart ein Membranreaktor für die Polymerisation.

Die aus dem Stand der Technik bekannte Lösungen können jedoch noch Verbesserungspotential aufweisen, insbesondere hinsichtlich einer effizienten Polymerisation von Vinylidenfluorid zur Herstellung von Polyvinylidenfluorid und/oder deren Copolymeren. Es ist daher die Aufgabe der vorliegenden Erfindung, eine Maßnahme zu schaffen, durch welche wenigstens ein Nachteil des Stands der Technik zumindest teilweise überwunden wird. Es ist insbesondere eine Aufgabe der vorliegenden Erfindung, eine Lösung bereitzustellen, mittels welcher eine effiziente Herstellung von Polyvinylidenfluorid möglich ist.

Die Lösung der Aufgabe erfolgt erfindungsgemäß durch ein Verfahren mit den Merkmalen des Anspruchs 1. Bevorzugte Ausgestaltungen der Erfindung sind in den Unteransprüchen, in der Beschreibung und in den Figuren offenbart, wobei weitere in den Unteransprüchen oder in der Beschreibung oder den Figuren beschriebene oder gezeigte Merkmale einzeln oder in einer beliebigen Kombination einen Gegenstand der Erfindung darstellen können, wenn sich aus dem Kontext nicht eindeutig das Gegenteil ergibt.

Die vorliegende Erfindung betrifft ein Verfahren zum Herstellen von Polyvinylidenfluorid oder einem Polyvinylidenfluorid-Copolymer unter Polymerisation von wenigstens Vinylidenfluorid als Monomer, wobei das Verfahren zumindest die Verfahrensschritte aufweist:
i) Bereitstellen eines kontinuierlich betreibbaren Polymerisationsreaktors, wobei der Polymerisationsreaktor einen Monomerraum und einen durch eine bevorzugt hydrophobe Membran von dem Monomerraum getrennten Polymerisationsraum aufweist;
ii) Einleiten von Vinylidenfluorid in den Monomerraum mit einem ersten Druck p₁;
iii) Einleiten einer wässrigen Polymerisationslösung in den Reaktionsraum mit einem zweiten Druck p₂, wobei
iv) p₁ größer oder gleich ist, wie p₂; wobei
v) das Vinylidenfluorid in die wässrige Phase übergeht und
vi) in dem Reaktionsraum eine Polymerisation von Vinylidenfluorid zu Polyvinylidenfluorid oder einem Polyvinylidenfluorid-Copolymer stattfindet.

Ein derartiges Verfahren erlaubt eine vorteilhafte Polymerisation von Vinylidenfluorid und gegebenenfalls einem weiteren Monomer unter Erzeugung von Polyvinylidenfluorid oder gegebenenfalls einem Polyvinylidenfluorid-Copolymer.

Das beschriebene Verfahren umfasst zumindest die folgenden Verfahrensschritte, wobei die nachfolgend beschriebenen Verfahrensschritte in der gezeigten Reihenfolge ablaufen können, aber auch zumindest teilweise zeitgleich oder in einer abweichenden Reihenfolge vorgesehen sein können.

Zunächst erfolgt gemäß Verfahrensschritt i) das Bereitstellen eines kontinuierlich betreibbaren Polymerisationsreaktors, wobei der Polymerisationsreaktor einen Monomerraum und einen durch eine Membran von dem Monomerraum getrennten Polymerisationsraum aufweist.

Insbesondere wird der Polymerisationsreaktor in dem beschriebenen Verfahren kontinuierlich betrieben, was für den Fachmann verständlich Vorteile bei der Effizienz machen kann. Insbesondere bei kontinuierlicher Fahrweise des hier beschriebenen Verfahrens bieten sich weiterhin Vorteile gegenüber Rührreaktoren gemäß dem Stand der Technik, da dort Rüst- und Reinigungszeiten zwischen Batches die Raum-Zeit-Ausbeute von Rührkesseln stark reduzieren.

Ferner kann unter einem Polymerisationsreaktor grundsätzlich jegliches Gebilde verstanden werden, welches der beschriebenen Definition genügt und in welchem das Verfahren durchführbar ist.

Hierzu umfasst der Polymerisationsreaktor einen Monomerraum und einen Polymerisationsraum. Beide Räume sind derart ausgestaltet und bevorzugt an entsprechende Peripherie, wie insbesondere Ableitungen und Zuleitungen, angebunden, dass in den Monomerraum ein oder mehrere Monomere eingebracht werden können und dass in dem Polymerisationsraum entsprechend eine wässrige Reaktionslösung eingefügt werden kann und die Polymerisation ablaufen kann. Hierzu können der Monomerraum und der auch als Reaktionsraum zu bezeichnende Polymerisationsraum bevorzugt entsprechend druckfest ausgebildet sein. Darüber hinaus können entsprechende Temperiereinrichtungen vorgesehen sein, um den Reaktor beziehungsweise das Medium in dem Reaktor bevorzugt zu heizen oder gegebenenfalls auch zu kühlen.

Der Monomerraum und der Polymerisationsraum sind dabei ferner durch eine Membran getrennt.

Vorzugsweise ist die Membran hydrophob. Unter einer hydrophoben Membran ist im Sinne der vorliegenden Erfindung zu verstehen, dass die Membran mit Bezug auf Wasser hydrophobe Eigenschaften aufweist. Dies bedeutet wiederum beispielsweise, dass der Kontaktwinkel, auch als Benetzungswinkel bezeichnet, von Reinstwasser (Leitfähigkeit ≤ 1,1 µS/cm bei 20 °C, gesamter organischer Kohlenstoff ≤ 0,5 mg/l, Nitrat ≤ 0,2 mg/l) bei mehr als 75 ° liegt. Bei einem entsprechenden Kontaktwinkel unter 75° kann erfindungsgemäß von einer hydrophilen Membran beziehungsweise von hydrophilen Eigenschaften der Membran gesprochen werden.

Es gibt grundsätzlich verschiedene Möglichkeiten, die Membran hydrophob auszugestalten, wie dies in größerem Detail nachfolgend beschrieben ist. Beispielsweise kann die Membran selbst aus einem hydrophoben Material ausgebildet sein, oder auch aus einem nicht hydrophoben oder wenig hydrophoben Material und mit einer Beschichtung versehen sein, welche entsprechende hydrophobe Eigenschaften aufweist oder verbessert.

Erfindungsgemäß ist es jedoch auch möglich, dass die Membran hydrophile Eigenschaften aufweist. Hierzu sind beispielsweise an sich hydrophile Membranen von Vorteil oder auch hydrophobe Membranen, die mit einer hydrophilen Beschichtung versehen sind, wie etwa Polyethylenglycol (PEG), Polyvinylalkohol (PVA), Poly-(ethylenglykol)-diacrylat (PEGDA), Poloxamere, Meroxapole und/oder vernetzte Mischungen aufweisend wenigstens eines der vorgenannten Bestandteile. Auch kann ein Filterkuchen zu hydrophilen Eigenschaften führen. Durch die insbesondere sehr dünne, hydrophile Schicht wird der Gastransport nur unwesentlich verschlechtert, dafür ergeben sich große Vorteile hinsichtlich der Vorbeugung von Ablagerungen (PVDF Partikel, Emulgatoren) beziehungsweise von Fouling auf der Membran, die den Stofftransport mindern würden.

Darüber hinaus ist die Membran beispielsweise porös, also mit Poren versehen, welche den Monomerraum mit dem Polymerisationsraum verbinden. Die Poren sind dabei in Form, Verteilung, Anzahl und Größe grundsätzlich frei wählbar, insoweit ein Durchtritt des Monomergases von dem Monomerraum in den Polymerisationsraum möglich ist insbesondere derart, dass ein Durchtritt der wässrigen Reaktionslösung in den Monomerraum verhindert werden kann.

Die Poren können dabei in Form und Größe derart ausgestaltet sein, dass unter den Reaktionsbedingungen ein blasenfreier Eintritt des Monomergases in die Flüssigkeit in dem Reaktionsraum ermöglicht werden kann. Hierzu können die Poren angepasst sein an das Material der Membran und dabei insbesondere an die Eigenschaften der Membran. Dadurch kann es vermieden werden, dass die Gasblasen zerschlagen werden müssen, was einen hohen Energieeintrag benötigt. Der gasblasenfreie Eintrag kann insbesondere durch hydrophobe Eigenschaften der Membran mit geeigneten Druckeigenschaften in dem Monomerraum und in dem Polymerisationsraum ermöglicht werden. Entsprechend kann es bevorzugt sein, dass die Verfahrensschritte ii) und iii) derart ausgeführt werden, dass ein gasblasenfreier Eintrag von Monomergas, insbesondere von Vinylidenfluorid, in die wässrige Lösung erfolgt.

Darüber hinaus kann die Membran auch nicht porös sein. In diesem Fall kann beispielsweise eine Ausbildung mit einer PDMS (Polydimethylsiloxan)-Beschichtung vorgesehen sein, die dicht beziehungsweise porenfrei ist. Dabei kann hinsichtlich des Stofftransports von einem Durchgang des Monomers oder der Monomere im Sinne des Lösungs-Diffusions-Modells ausgegangen werden, wie etwa beschrieben in Membrane Technology and Applications, Richard W. Baker, Wiley, 2004.

Um eine Polymerisation zu ermöglichen ist es ferner vorgesehen, dass gemäß Verfahrensschritt ii) Vinylidenfluorid in den Monomerraum mit einem ersten Druck p₁ eingeleitet wird und dass gemäß Verfahrensschritt iii) eine wässrige Polymerisationslösung, auch als Reaktionslösung zu bezeichnen, in den Reaktionsraum mit einem zweiten Druck p₂ eingeleitet wird. Genauer ist hier vorgesehen, dass p₁ größer oder gleich oder kleiner ist, wie p2.

Hinsichtlich der Polymerisationslösung kann es bevorzugt sein, dass diese und damit die wässrigen Prozessströme, die in den Reaktor eintreten, vor dem Eintritt in den Reaktor von Sauerstoff befreit werden. Dazu werden beispielsweise die Vorlagebehälter mit Stickstoff geflutet und vor der Pumpe, welche zum Fördern der wässrigen Prozessströme verwendet wird, ein Entgaser, wie etwa ein Membranentgaser, angeordnet, der gelöste Gase aus den Flüssigkeiten entziehen kann. Grundsätzlich kann auch der Monomerstrom hinsichtlich bestimmter Gase, wie etwa Sauerstoff, entreichert werden und dabei bevorzugt von Sauerstoff befreit werden.

Die entsprechenden Druckbereiche können in ihrer Größe als auch in dem relativen Verhältnis von p₁ und p₂ entsprechend den spezifischen Anforderungen gewählt werden.

Beispielsweise kann ein Betrieb mit p₂ > p₁ vorgesehen werden. Dadurch wird die Blasenbildung weiter unterdrückt, der Stofftransport bleibt aber weiter möglich, da dieser konzentrationsgetrieben ist und die beiden Phasen weiterhin an der Poren- bzw. Membranoberfläche in Kontakt stehen.

Bei einem Betrieb mit p₂ < p₁ findet ein besonders effizienter Eintrag von Gas in die Wasserphase statt, was einen hohen Umsatz gewährleisten kann, da der Gaseintrag vergleichsweise hoch ist.

Ein Betrieb bei p₂ = p₁ kann bei vergleichsweise hohem Umsatz ein vergleichsweise geringer Blaseneintrag ermöglicht werden.

Entsprechend werden in dem Polymerisationsreaktor und dabei genauer in dem Monomerraum und in dem Polymerisationsraum die entsprechenden Polymerisationsbedingungen bereitgestellt. Genauer wird der Monomerraum mit Monomer gespeist, welches durch die Membran in den Polymerisationsraum übergehen kann. Dies erfolgt gemäß Verfahrensschritt v), wonach das Vinylidenfluorid und gegebenenfalls vorgesehene Comonomere in die wässrige Phase übergehen.

In dem Polymerisationsraum kann dann entsprechend und gemäß Verfahrensschritt vi) in der wässrigen Phase eine Polymerisation von Vinylidenfluorid stattfinden, so dass Polyvinylidenfluorid gebildet wird. Wie vorstehend angedeutet kann zusätzlich zu Vinylidenfluorid auch ein weiteres Monomer in den Monomerraum oder in den Polymerisationsraum eingebracht werden, so dass ein Polyvinylidenfluorid-Copolymer gebildet wird.

Das gebildete Polymer wie insbesondere das Polyvinylidenfluorid kann dann nach der Reaktion, insbesondere bei kontinuierlicher Fahrweise des Reaktors, aus dem Reaktor ausgebracht werden und anschließend von der wässrigen Phase getrennt und gegebenenfalls gewaschen und getrocknet werden.

Ein derartiges Verfahren weist gegenüber Lösungen aus dem Stand der Technik deutliche Vorteile auf.

Durch die Verwendung eines vorbeschriebenen Verfahrens und dabei insbesondere durch die Verwendung des beschriebenen kontinuierlichen Membranreaktors wird es möglich, eine Gas-Flüssig-Phasengrenzfläche ohne oder mit nur sehr wenigen Gasblasen zur Verfügung zu stellen. Dazu wird die Membran als Kontaktor zwischen den beiden Phasen, also der gasförmigen Monomerphase und der flüssigen Polymerisationsphase, eingesetzt. Durch die Membran sind die Phasen stabil voneinander getrennt.

Die Erfindung stellt dabei die notwendige Phasengrenzfläche in einem kontinuierlichen, beispielsweise tubulären, Reaktor mittels einer Membran zur Verfügung und es konnte gezeigt werden, dass die Polymerisation in diesem Reaktor ohne die Verwendung von Fluoremulgatoren durchgeführt werden kann oder in anderen Worten, dass das Verfahren beziehungsweise die Polymerisationsphase frei ist von Fluoremulgatoren. Stattdessen wird es bei dem beschriebenen Verfahren möglich, auf Emulgatoren zu verzichten oder Emulgatoren zu verwenden, die ausgewählt sind aus Meroxapolen und Poloxameren, welche bedenkenlos verwendet werden können oder zumindest ein signifikant reduziertes Gefahrenpotential aufweisen.

Dies kann deshalb von großem Vorteil sein, da die bislang großtechnisch verwendeten Fluoremulgatoren ein Problem konventioneller Herstellungsprozesses sind, da diese die Umwelt stark belasten und auch Ersatzstoffe zu PFOA in nächster Zeit voraussichtlich schwer erhältlich und nur nachteilig verwendbar sein werden. Somit kann der Nachteil aus dem Stand der Technik etwa bei der Verwendung von Rührreaktoren verhindert werden, dass große Mengen an wässriger Lösung mit umweltschädlichen Substanzen, wie etwa PFOA oder ähnlichen Alternativen, anfallen, welche entsprechend entsorgt werden müssen.

Zusätzlich zu einem Emulgator kann das Vorsehen eines Initiators für die Polymerisationsreaktion wichtig sein und kann etwa mit der wässrigen Reaktionslösung eingebracht werden.

Ein mechanischer Energieeintrag etwa unter Verwendung aktiver Rührwerke, wie aus dem Stand der Technik insbesondere unter Verwendung von Rührreaktoren bekannt, kann erfindungsgemäß ferner vermieden werden. Dies reduziert den Energieverbrauch der Reaktion und ermöglicht ferner eine einfache und kostengünstige Gestaltung des Polymerisationsreaktors. Dies ist ein signifikanter Vorteil gegenüber Lösungen aus dem Stand der Technik, da die Erzeugung der Phasengrenzfläche für den Gaseintrag mit einem Rührwerk einen hohen mechanischen Energieeintrag in den Reaktor erfordert, von dem nur ein Bruchteil verwendet wird, um Phasengrenzfläche zwischen Monomergas und wässriger Phase zu erzeugen und somit nur ein geringer Wirkungsgrad ermöglicht wird.

Auch kann auf die Verwendung hoher Prozessdrücke verzichtet werden, welche gemäß dem Stand der Technik meist notwendig sind, aber ebenfalls aus energetischer Sicht und für die Prozesssicherheit ein Nachteil bisheriger Herstellungsverfahren mit sich bringen. Beispielsweise entstehen im Stand der Technik große Mengen brennbaren Gases bei hohen Drücken im Reaktor.

Des Weiteren kann erfindungsgemäß ein kontinuierlicher Prozess in einem Strömungsrohrreaktor realisiert werden, bei dem Reinigungs- und Rüstzeiten, wie beim Chargenbetrieb, entfallen. Dies ist besonders vorteilhaft, da der bisherige Chargenbetrieb in der PVDF Herstellung eben den Nachteil von langen Polymerisationszeiten gefolgt von Reinigungs- und Rüstzeiten hat, bevor die nächste Charge im Reaktor hergestellt werden kann. Durch eine stark steigende Weltmarktnachfrage an PVDF, vor allem durch die Verwendung des Materials in der Batterieproduktion, sind wirtschaftliche und effiziente Prozesse in der Herstellung zukünftig von immer größerer Bedeutung, weshalb das erfindungsgemäße Verfahren auch in dieser Hinsicht besondere Vorteile erlauben kann.

Die Verwendung eines derartigen Polymerisationsreaktors für die Polymerisierung von Vinylidenfluorid erlaubt es auf vorteilhafte Weise, die Kontrolle der lokalen Reaktionsbedingungen, wie insbesondere Druck, Temperatur und Konzentration (p,T,C) zu ermöglichen. Dadurch können entsprechende Mängel von Batch-Reaktoren beseitigt werden, eine umfassende Auslegung und eine Prozess- und Produktqualitätskontrolle werden ermöglicht, die mit den heutigen Batch-Reaktoren nicht erreicht werden kann.

Weiterhin ist es ebenfalls insbesondere im Hinblick auf die Verwendung von Rührkesseln aus dem Stand der Technik erfindungsgemäß vorteilhaft, dass die Verweilzeiten der Reaktanden durch eine sehr gute Durchmischung sehr homogen sein kann, ebenso wie die Konzentrationsverteilung in der Reaktionsphase. Dies kann wiederum sehr definierte und verlässliche Reaktionsbedingungen ermöglichen.

Darüber hinaus können die Nachteile von Rührreaktoren überwunden werden, wonach ein schlechter Wärmeeintrag bzw. -austrag durch ein schlechtes Volumen zu Oberflächenverhältnis vorliegt und daraus resultierend Temperaturgradienten im Rührkessel vorliegen, was wiederum zu inhomogenen Reaktionsbedingungen führt.

Das erfindungsgemäße Verfahren führt daher zu einer sehr homogenen Produktqualität und Schwankungen der Produktqualität zwischen einzelnen Batches können vermieden werden, da zwar Polymerisationsreaktionen äußerst sensibel für Schwankungen in Prozessparametern sind, dies jedoch wie vorstehend beschrieben erfindungsgemäß durch homogene und definierte Prozessparameter unproblematisch ist. Demgegenüber führt bei Rührkesseln aus dem Stand der Technik der Umstand eines sich nicht einstellenden sogenannten Steady-States im Reaktor zu sich ständig ändernden Prozessparametern, deren Änderung von Batch zu Batch leicht unterschiedlich ist, was sich eben negativ auf die Produktqualität auswirkt.

Schließlich führt ein Up-Scaling bei Rührkesseln zu einer Verstärkung der vorgenannten Probleme, ist erfindungsgemäß jedoch problemlos möglich.

Bevorzugt kann die Membran wenigstens eines aus einer Keramik und einem Polymer aufweisen. Es hat sich gezeigt, dass insbesondere aus diesen Materialien Membranen ausgebildet sein können, die hinsichtlich Poren und hydrophobem Charakter für das hier beschriebene Verfahren besonders vorteilhaft sind oder ausgestaltet werden können und insbesondere den Reaktionsbedingungen standhalten können beziehungsweise diesbezüglich langzeitstabil sind. Dabei kann die Membran nur eine Keramik, nur ein Polymer oder auch eine Keramik und ein Polymer aufweisen.

Bei der Verwendung eines Polymers, wie etwa eines Polyolefins oder Polyolefin-Copolymers, besonders bevorzugt bei der Verwendung von Polypropylen, kann diesbezüglich von Vorteil sein, dass die vorgenannten Eigenschaften bereits mit inhärenten hydrophoben Eigenschaften einhergehen. Daher kann die Herstellung besonders vorteilhaft sein. Weiterhin kann die Membran auch aus Polydimethylsiloxan (PDMS) oder Polytetrafluorethylen (PTFE) ausgebildet sein, beispielsweise dicht beziehungsweise porenfrei oder auch porös.

Bei der Verwendung eines keramischen Werkstoffs, wie bevorzugt von Aluminiumoxid (Al₂O₃) zur Herstellung der Membran können besonders vorteilhafte Stabilitätseigenschaften erreicht werden. Entsprechend kann eine Membran insbesondere eine tragende Schicht, auch als Support bezeichnet, aus Aluminiumoxid aufweisen. Ferner kann Aluminiumoxid auch als aktive Schicht beziehungsweise Aktivschicht dienen, welche den Gasübergang steuert beziehungsweise beeinflusst. Die keramische Membran kann auch eine aktive Schicht aus Titandioxid (TiO₂) oder Zirkondioxid (ZrO₂) aufweisen, welche beispielsweise an einer Aluminiumoxidschicht angeordnet sein können.

Wie vorstehend beschrieben kann die Membran auch eine Keramik und einen Kunststoff aufweisen. Beispielsweise kann, um die hydrophoben Eigenschaften zu erreichen, die Keramik etwa mit einer hydrophoben Beschichtung versehen werden. Als eine derartige Beschichtung eignet sich etwa ebenfalls ein Polymer, wie etwa Polytetrafluorethylen (PTFE) oder auch Polydimethylsiloxan (PDMS), welche wieder auf einem Keramiksupport, wie etwa auf einem Support aus Aluminiumoxid, aufgebracht sein können. Dabei kann die Beschichtung insbesondere auf der Reaktionsseite, also auf der Seite des wässrigen Mediums sein, und ferner als Aktivschicht dienen.

Die Polymere können somit als Beschichtung aufgebracht oder, etwa wirkend als Filterkuchen zwischen Support- und aktiver Schicht der Membran eingebracht werden.

Beispielsweise können sich dann Polymerpartikel, wie etwa PTFE Partikel oder PDMS-Partikel, in der Membranstruktur in der Nähe der Oberfläche befinden.

Grundsätzlich kann es somit bevorzugt sein, dass die Membran aus einem Material ausgebildet ist, das ausgewählt ist aus der Gruppe bestehend aus Aluminiumoxid, Titandioxid, Zirkondioxid, Polytetrafluorethylen, Polydimethylsiloxan und Polypropylen.

Alternativ kann die Membran auch hydrophile Eigenschaften aufweisen und etwa Polyethylenglycol (PEG), Polyvinylalkohol(PVA), Poly-(ethylenglykol)-diacrylat (PEGDA), Poloxamere, Meroxapole und/oder vernetzte Mischungen aufweisend wenigstens eines der vorgenannten Bestandteile aufweisen.

Es kann weiterhin bevorzugt sein, dass eine Druckdifferenz zwischen p₁ und p₂ in einem Bereich liegt von ≤ 2 bar. In dieser Ausgestaltung kann besonders bevorzugt ein gasblasenfreier Eintrag des Monomers in die wässrige Polymerisationsphase ermöglicht werden. Darüber hinaus kann insbesondere in dieser Ausgestaltung unter geringem Druck gearbeitet werden, was die Voraussetzungen an den apparativen Aufbau reduzieren und das Verfahren als Ganzes vereinfachen kann. Im Detail kann der geringe Transmembrandruck besonders von Vorteil sein für die Membranauswahl, da die Membran durch Druckdifferenz keine großen mechanischen Kräfte erfährt. Dadurch kann der Prozessdruck also p1 und p2 relativ hoch sein, ohne dass die Membran hohen mechanischen Belastungen ausgesetzt ist.

Hinsichtlich der gewählten Reaktionsdrücke kann erfindungsgemäß insbesondere eine Ausgestaltung von Vorteil sein, bei der der Druck in dem Polymerisationsreaktor, also sowohl der Monomerphase beziehungsweise im Monomerraum, als auch der Reaktionsphase also im Polymerisationsraum, in einem Bereich liegt von ≤ 50 bar, beispielsweise ≤ 30 bar, besonders bevorzugt ≤ 10 bar. Dadurch können die apparativen Anforderungen reduziert werden, was Komplexität und Kosten verbessern kann.

Hinsichtlich der Ausgestaltung des Reaktors kann es ferner vorteilhaft sein, dass der Polymerisationsreaktor eine Mehrzahl von insbesondere in Reihe geschalteter tubulärer Membranen aufweist, die in einem gemeinsamen Reaktorgehäuse angeordnet sind. In dieser Ausgestaltung kann auf einfache Weise durch eine in Reihe Schaltung der jeweiligen Membranen eine sehr lange Laufdistanz der Komponenten entlang des Reaktors gewährleistet werden. Dadurch kann mit einem vergleichsweise raumarmen Reaktor eine lange Kontaktzeit von Monomerphase und Reaktionsphase ermöglicht werden, was einen hohen Umsatz sicherstellt und die Effizienz des Verfahrens erhöht. Darüber hinaus kann so ein hohes Molekulargewicht des erzeugten Polymers erreicht werden.

Beispielsweise kann in dieser Ausgestaltung innerhalb der bevorzugt zylindrischen Membranen das wässrige Reaktionsmedium geführt werden, und in dem Reaktor außerhalb der Membranen das Monomergas. Jedoch ist grundsätzlich auch eine umgekehrte Reaktionsführung möglich, bei der innerhalb der Membranen das Monomergas geführt wird, und in dem Reaktor außerhalb der Membranen das Reaktionsmedium. Jedoch kann erstere Variante hinsichtlich des erzeugten Molekulargewichts von besonderem Vorteil sein.

Es kann weiterhin bevorzugt sein, dass die Membran eine Mehrzahl an insbesondere in Reihe geschalteter Durchflusskanäle aufweist. In dieser Ausgestaltung kann somit eine Vielzahl von Kanälen im Inneren einer Membran vorliegen, was wiederum bei einer durch eine in Reihe Schaltung der jeweiligen Membranen eine sehr lange Laufdistanz der Komponenten entlang des Reaktors gewährleistet werden. Dadurch kann mit einem vergleichsweise raumarmen Reaktor eine lange Kontaktzeit von Monomerphase und Reaktionsphase ermöglicht werden, was einen hohen Umsatz sicherstellt und/oder ein hohes Molekulargewicht ermöglichen kann. Die wässrige Phase wird bevorzugt dem Lumen der Membran zugeführt, während sich die Gasphase auf der Mantelseite befindet, wobei ein Reaktorgehäuse die Membran umschließen kann. In anderen Worten kann die Membran von außen mit Monomergas umströmbar sein.

Diese Ausgestaltung kann besonders hohe Drücke ermöglichen, was die Monomerlöslichkeit in dem wässrigen Reaktionsmedium verbessert.

Grundsätzlich kann aber auch eine Parallelschaltung einer Mehrzahl von Membranen oder einer Mehrzahl von Durchflusskanälen von Vorteil sein. Dadurch kann eine größere Menge an Reaktionsmedium zeitgleich durch den Reaktor fließen, was ebenfalls Vorteile hinsichtlich des Durchsatzes, also der Reaktionsmenge, erlauben kann.

Grundsätzlich kann es weiter bevorzugt sein, dass der Reaktor zylinderförmig gewickelt ist, also die gesamte Anordnung aus Membranen und Reaktorgehäuse eine entsprechende Wicklung aufweist. Dies erlaubt es, die Größe des Reaktors weiter zu minimieren und ferner eine sekundäre Strömung in Form von Taylor-Wirbeln zu erzeugen, um eine bessere Durchmischung der wässrigen Phase zu erlauben. Dadurch können die Polymerisationsbedingungen weiter verbessert werden. Insbesondere in dieser Ausgestaltung kann eine Parallelschaltung einer Mehrzahl von Membranen beziehungsweise Polymerisationsräumen von Vorteil sein, da durch die Wicklung auch bei geringem Raum eine Lange Verweilzeit sichergestellt sein kann und eine Reihenschaltung daher oftmals nicht notwendig ist.

Hinsichtlich einer Schaltung der jeweiligen Kanäle in Reihe wie vorstehen beschrieben kann es vorgesehen sein, dass die Membranen der Polymerisationsreaktoren an den jeweiligen axialen Enden durch Deckelstrukturen geschlossen sind, welche die jeweiligen Kanäle verbindende Umlenkstrukturen aufweisen. Dies ermöglicht eine apparativ einfache Schaltung der Kanäle und ermöglicht gleichermaßen einen einfachen Service und ein sicheres Schließen der Membran. des Reaktors.

Es kann weiterhin bevorzugt sein, dass in dem Polymerisationsraum eine statische Mischerstruktur angeordnet ist. Unter einer derartigen Mischerstruktur kann insbesondere eine solche Struktur verstanden werden, die in das flüssige Reaktionsmedium auch radiale Strömungskomponenten einbringen kann. Dies ermöglicht es, dass die Konzentration in der Reaktionsphase deutlich homogener ist, wodurch wiederum mehr Monomer in der Reaktionsphase aufgenommen werden kann, ohne dass die maximale Monomerkonzentration sich verändert. So kann der Polymerisationsumsatz beziehungsweise die Effizienz des Polymerisationsverfahrens verbessert werden. Zum anderen können Ablagerungen der entstehenden Feststoffpartikel des gebildeten Polymers auf der Membran und somit ein Verstopfen des Polymerisationsreaktors verhindert werden. Auch können Ablagerungen auf der Membranoberfläche, die nicht zwingend zu einer Verstopfung führen aber den Monomertransport vom Monomerraum in den Reaktionsraum behindern oder verlangsamen würden und somit die Reaktion negativ beeinflussen, reduziert werden.

Weiter bevorzugt kann wenigstens eines von der Membran und der Mischerstruktur mit einem Katalysator versehen sein. Beispielsweise kann der Katalysator an der Oberfläche der Membran oder der Mischerstruktur immobilisiert sein oder auch in einer zusätzlichen Beschichtung vorliegen. Als Beispiel für Katalysatoren sind etwa Ziegler-Natta-Katalysatoren zu nennen, ohne jedoch grundsätzlich hierauf beschränkt zu sein. Durch das Vorsehen eines Katalysators an der Membran oder der Mischerstruktur kann die Polymerisation weiter positiv beeinflusst werden, was sich etwa positiv auf die Molekulargewichtsverteilung auswirken kann.

Es kann weiterhin bevorzugt sein, dass das Verfahren in wenigstens zwei in Reihe geschalteten Polymerisationsreaktoren durchgeführt wird. In dieser Ausgestaltung können im Wesentlichen die Vorteile erreicht werden, wie diese für in Reihe geschaltete Membranen vorstehend beschrieben sind. Insbesondere kann die Verweilzeit der Polymerisationslösung in einem Polymerisationsreaktor und damit die Polymerisationszeit verlängert werden, was sich vorteilhaft auf das Molekulargewicht des erzeugten Polymers auswirken kann. Dies ist dabei auch dann möglich, wenn die einzelnen Membranen gegebenenfalls eine vergleichsweise kurze Verweilzeit bereitstellen. Weiter lässt sich so auch die Temperaturführung über den Reaktionsfortschritt einfach verändern. Beispielsweise kann der erste Reaktor stärker erhitzt werden als der darauf folgende Reaktor, indem etwa verschiedene Heizbänder um die Reaktoren angeordnet sind.

Weiterhin kann es bevorzugt sein, wenn in einem Polymerisationsreaktor zwischen zwei in Reihe geschalteten Membranen oder zwischen zwei in Reihe geschalteten Durchflusskanälen oder zwischen zwei in Reihe geschalteten Polymerisationsreaktoren ein Stoffstrom einbringbar oder ausbringbar ist. So wird es möglich, beispielsweise Polymerstrom zu entfernen oder, was von größerem Vorteil sein kann, erneut Initiator oder beispielsweise ein Chain-Transfer-Agent in den Polymerisationsstrom einzuleiten, um so die Molekulargewichtsverteilung des Produktes zu beeinflussen. Die Länge der verschalteten Reaktoren oder Membranen kann so angepasst werden, dass die Initiatorzugabe oder eine andere Zugabe genau zum gewünschten Zeitpunkt erfolgt.

Nachfolgend wird die Erfindung unter Bezugnahme auf die anliegenden Zeichnungen exemplarisch erläutert, wobei die nachfolgend dargestellten Merkmale sowohl jeweils einzeln als auch in Kombination einen Aspekt der Erfindung darstellen können, und wobei die Erfindung nicht auf die folgende Zeichnung, die folgende Beschreibung und das folgende Ausführungsbeispiel beschränkt ist.

### Es zeigen:

Fig. 1 eine Anordnung mit einem Polymerisationsreaktor zur Durchführung des Verfahrens gemäß der vorliegenden Erfindung;
Fig. 2. eine vergrößerte Ansicht einer Ausgestaltung des Polymerisationsreaktors für eine Anordnung aus Fig. 1;
Fig. 3 eine Membran für einen Polymerisationsreaktor;
Fig. 4 einen Polymerisationsreaktor mit der Membran aus Fig. 3;
Fig. 5 eine Detailansicht des Polymerisationsreaktors aus Fig. 4, wobei insbesondere die Deckelstruktur gezeigt ist; und
Fig. 6 eine weitere Ausgestaltung eines Polymerisationsreaktors für ein Verfahren gemäß der vorliegenden Erfindung.

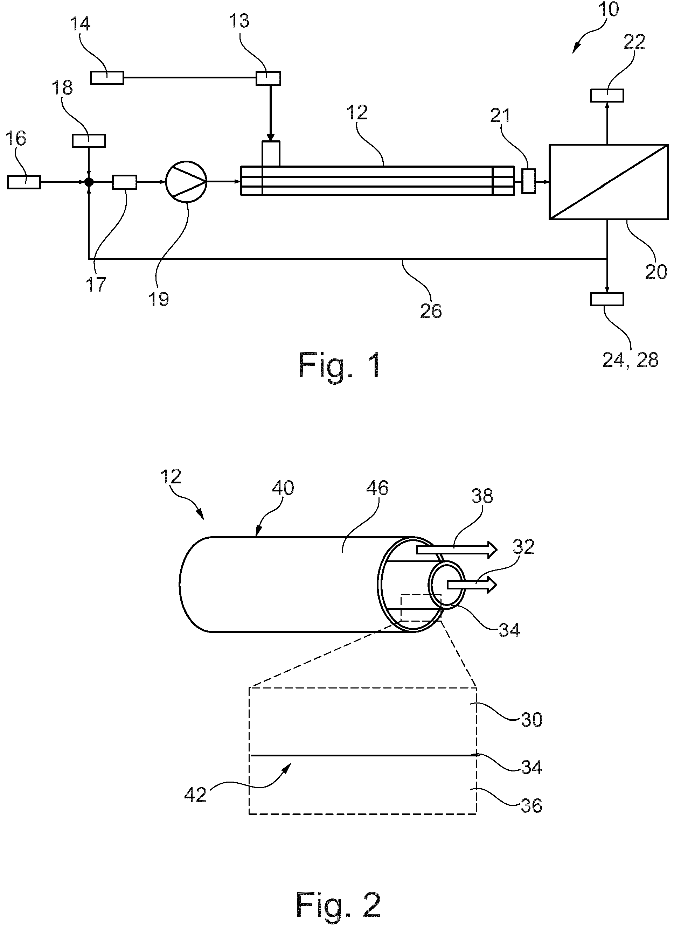

Figur 1 zeigt eine Anordnung 10 mit einem Polymerisationsreaktor 12 zur Durchführung des Verfahrens gemäß der vorliegenden Erfindung. Ein derartiges Verfahren dient der Herstellung von Polyvinylidenfluorid unter Polymerisation von Vinylidenfluorid. Unter Zugabe weiterer Monomere zusätzlich zu Vinylidenfluorid kann auch ein Polyvinylidenfluorid-Copolymer erzeugt werden, wobei die nachfolgenden Ausführungen betreffend die Herstellung von Polyvinylidenfluorid sich entsprechend übertragen lassen.

Bei der Anordnung 10 gemäß Figur 1 wird das gasförmige Monomer Vinylidenfluorid aus einem Reservoir 14 entnommen und in den Polymerisationsreaktor 12 geleitet. Flussabwärts des Reservoirs 14 ist ein Druckregler 13, wie beispielsweise ein Druckminderer oder ein Verdichter, vorgesehen, der in Abhängigkeit des in dem Reservoir 14 herrschenden Drucks gewählt sein kann. Weiterhin wird eine wässrige Polymerisationslösung in den Polymerisationsreaktor 12 geleitet. Dabei kann etwa Wasser, gegebenenfalls mit einem Initiator, einem Tank 16 entnommen werden und aus einem Tank 18 kann ein Emulgator, ebenfalls beispielsweise als wässrige Lösung, hinzugefügt und mit dem Wasser gemischt werden. Ein oder beide der Tanks 16, 18 können vorgewärmt werden, um einen initialen Zerfall des Initiators herbeizuführen und schon am Reaktoreintritt Radikale vorliegen zu haben, die eine Polymerisation anregen. Die Vorerwärmung kann aber auch in der Leitung zum Polymerisationsreaktor 12 hin erfolgen. Potenziell ist es auch möglich die beiden Tanks 16, 18 nicht zu trennen und nur einen zu nutzen, in dem Initiator und Emulgator in Wasser vorliegen.

Es ist weiter gezeigt, dass zwischen den Tanks 16, 18, und dem Polymerisationsreaktor 12, beispielsweise flussaufwärts einer Pumpe 19, ein Entgaser 17, wie etwa ein Membranentgaser, vorgesehen sein kann, um die Lösung im Polymerisationsreaktor 12 möglichst frei von Sauerstoff zu halten. Dies kann von Wichtigkeit sein, da Sauerstoff auf die Reaktion inhibierend wirkt und aus allen Prozessströmen entfernt werden sollte. Entsprechend können die Tanks 16, 18 auch mit einem Inertgas, wie etwa mit Stickstoff oder Argon, durchspült werden, um den initialen Sauerstoffanteil vor dem Entgaser 17 so gering wie möglich zu halten.

In dem Polymerisationsreaktor 12 findet eine Polymerisation statt wie nachfolgend in größerem Detail beschrieben. Zusammenfassend ist der Polymerisationsreaktor 12 mit einer beispielsweise porösen und hydrophoben oder hydrophilen Membran 34 ausgestattet, um eine optimierte Phasengrenze zwischen dem gasförmigen Monomer und der wässrigen Phase zu schaffen, wie nachfolgend gezeigt.

Der Ausgang des Polymerisationsreaktors 12 ist mit einer optionalen Filtereinheit 20 verbunden, in welcher das erzeugte Polymerprodukt 22, also feste PVDF-Partikel, gegebenenfalls von der wässrigen Phase getrennt werden können. Das Wasser beziehungsweise das Filtrat 24 kann entsprechend in einem Rezyklatstrom 26 rezykliert und in einem Kreislauf weiter gereinigt werden, um erneut für den Polymerisationsprozess verwendet zu werden. Ein Spülstrom 28 kann verwendet werden, um die Anreicherung von Additiven oder Verunreinigungen der Reaktion im Prozess zu verhindern. Das Polymerprodukt 22 kann gereinigt und entsprechend in sauberer Form gewonnen werden. Alternativ kann jedoch aus unmittelbar der aus dem Polymerisationsrektor 12 entnommene Produktstrom weiterverwendet werden.

Flussabwärts des Polymerisationsreaktors 12 und etwa flussaufwärts der Filtereinheit 20 ist ein Überstromventil 21, welches auch als Backpressure Regulator bezeichnet werden kann, gezeigt.

Im Folgenden werden verschiedene Ausgestaltungen des Polymerisationsreaktors 12 beschrieben. Die Polymerisationsreaktoren 12 wie nachfolgend gezeigt können etwa in einer Anordnung 10 wie vorstehen beschrieben verwendet werden, sind jedoch nicht hierauf begrenzt.

In einer allgemeinen Form ist der Polymerisationsreaktor 12 in der Figur 2 gezeigt. Es ist zu erkennen, dass der Polymerisationsreaktor 12 einen Monomerraum 30 zum Aufnehmen von Monomergas als Monomerstrom 32 und einen durch die hydrophobe oder hydrophile und optional poröse Membran 34 von dem Monomerraum 30 getrennten Polymerisationsraum 36 zum Aufnehmen der wässrigen Polymerisationslösung als Strom 38 an Polymerisationsmedium aufweist. Der Polymerisationsraum 36 ist durch ein Reaktorgehäuse 40 nach außen begrenzt, welches ebenso wie die Membran 34 eine tubuläre Struktur aufweisen kann. Grundsätzlich können Monomerraum 30 und Polymerisationsraum 36 auch vertauscht sein. Darüber hinaus sind der Monomerstrom 32 und der Strom 38 an Polymerisationsmedium im Gleichstrom gezeigt, grundsätzlich ist jedoch auch ein Gegenstrom möglich.

In der vergrößerten Ansicht der Figur 2 sind insbesondere der Monomerraum 30 und der Polymerisationsraum 36 gezeigt, in welchen der Monomerstrom 32 und der Strom 38 an Polymerisationsmedium, getrennt durch die Membran 34, gezeigt sind. Die Membran 34 kann porös oder auch dicht sein. Durch die Membran 34 kann Monomergas in die Polymerisationslösung gelangen und so, insbesondere mittels Emulsionspolymerisation, das Polymer ausbilden. Hierzu kann die wässrige Phase beziehungsweise die Polymerisationslösung vor dem Eintritt in den Polymerisationsreaktor 12 vorgewärmt und der Polymerisationsreaktor 12 ferner selbst temperiert werden, etwa durch ein Heizband 46 über dem Reaktorgehäuse 40 oder durch Versenken des Polymerisationsreaktors 12 in einem Heizband, etwa mit Temperieröl. Der Prozessdruck kann durch ein proportionales Überstromventil aufgebaut werden wie vorstehend beschrieben.

Durch die Membran 34 und die Druckdifferenz zwischen beiden Phasen kann die Phasengrenzfläche 42 stabilisiert und ein Durchbrechen von Wasser bzw. Gas auf die jeweils andere Seite verhindert werden. So entsteht ein blasenfreier Eintrag von Monomer in die wässrige Reaktionsphase über die gesamte Länge des Polymerisationsreaktors 12, wodurch sicherstellt wird, dass die wässrige Phase an jedem Ort vollständig mit Monomer gesättigt ist und die maximale Menge Monomer der Polymerisation zur Verfügung steht.

Durch den kontinuierlich betreibbaren Polymerisationsreaktor 12 und seine verbesserten Stofftransporteigenschaften lässt sich PVDF bei geringeren Prozessdrücken, ohne mechanischen Energieeintrag und bei kürzeren Verweilzeiten kontinuierlich herstellen. Insbesondere lässt sich PVDF bei Drücken unterhalb von 20 bar und Verweilzeiten unter 1 h kontinuierlich herstellen. Dabei kommen bevorzugt keine Fluoremulgatoren zum Einsatz. Als Emulgatoren können verschiedene Meroxapole oder Poloxamere eingesetzt werden. Diese sind unbedenklich für Mensch und Umwelt und finden beispielsweise auch in Kosmetikprodukten Anwendung, sind somit auch für die hier durchgeführte Polymerisation bedenkenlos einsetzbar.

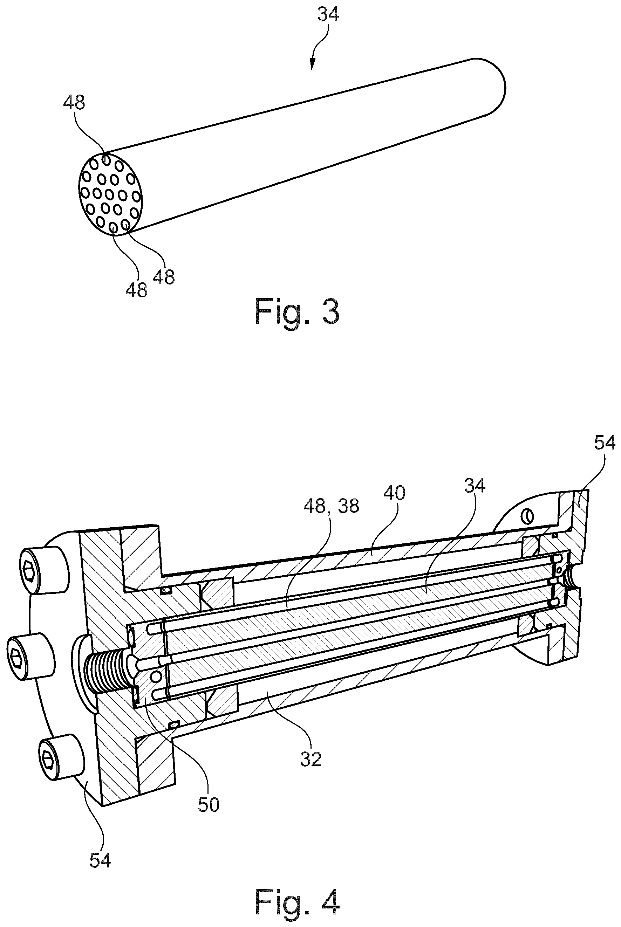

In der Figur 3 ist eine Ausgestaltung einer Membran 34 gezeigt, wobei Figur 4 die entsprechende Verwendung der Membran 34 aus Figur 3 in einem Polymerisationsreaktor 12 zeigt. Der Polymerisationsreaktor 12 kann dabei insbesondere für nicht-flexible beziehungsweise starre Membranen 34 geeignet sein

Die Membran 34 umfasst eine Mehrzahl an insbesondere in Reihe schaltbarer beziehungsweise geschalteter auch als Lumen zu bezeichnender Durchflusskanäle 48. Beispielsweise können bis zu 19 oder mehr Durchflusskanäle 48 vorgesehen sein. Die Membran 34 verfügt beispielsweise über einen mittleren Porendurchmesser von 50 nm, eine Länge von 200 mm und eben 19 parallele Durchflusskanäle 48. Diese können entsprechend sequenziell von dem Strom 38 an Polymerisationsmedium durchströmt werden und der Monomerstrom 32 kann dann außerhalb der Membran 34 aber innerhalb des Reaktorgehäuses 40 strömen.

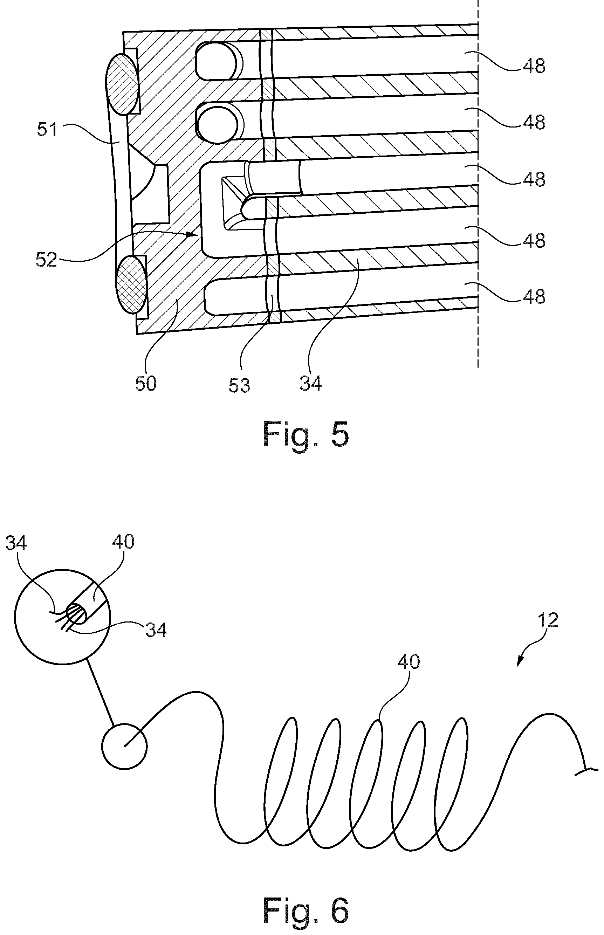

Um eine Reihenschaltung der Durchflusskanäle 48 zu erreichen, können entsprechende Deckel 50 mit eingearbeiteten Umlenkstrukturen 52 vorgesehen sein, welche den Strom 38 an Polymerisationsmedium zwischen den Durchflusskanälen 48 umlenken. Diese sind in größerem Detail in der Figur 5 gezeigt. Daraus ergibt sich eine beispielhafte Gesamtlänge der Membran 34 lumenseitig zu 3,8 m.

Der Polymerisationsrektor 12 der Figuren 4 und 5 kann ferner auch mit einem in Figur 1 gezeigten Überstromventil 21 ausgestattet sein.

Der Polymerisationsreaktor 12 kann durch entsprechende Endstücke 54 in axialer Richtung abgeschlossen werden. In den Figuren 4 und 5 ist ferner eine entsprechende Dichtung 51, hier ausgebildet als O-Ring, gezeigt, durch welche der Deckel 50 mit dem Endstück 54 fluiddicht und gasdicht verbunden werden kann. Ferner ist eine insbesondere als Dichtscheibe ausgestaltete Dichtung 53 gezeigt, durch welche die Membran 34 mit dem Deckel 50 fluiddicht und gasdicht verbunden werden kann.

Die Figur 6 zeigt eine weitere Ausgestaltung eines Polymerisationsreaktors 12. Bei der Ausgestaltung gemäß Figur 6 weist der Polymerisationsreaktor 12 eine Mehrzahl von insbesondere parallel geschalteter tubulärer Membranen 34 auf, die in einem gemeinsamen Reaktorgehäuse 40 angeordnet sind. Diese Ausgestaltung kann insbesondere für flexible Membranen 34 von Vorteil sein.

Darüber hinaus ist gezeigt, dass der Polymerisationsreaktor 12 zylinderförmig gewickelt ist. In dieser Ausgestaltung kann trotz einer vergleichsweise langen Reaktionsdauer sehr platzsparend beziehungsweise raumarm gearbeitet werden.

Genauer werden beispielsweise Membranen 34 aus Polypropylen mit einem mittleren Porendurchmesser von 100 nm und einer Länge von 3 m verwendet. Mehrere dieser Membranen 34 werden in einen zylindrisch aufgewickeltes Edelstahlrohr als Reaktorgehäuse 40 mit einer Gesamtlänge von 2,5 m eingebaut und etwa mit Epoxidharz an den Enden des Reaktors so abgedichtet, dass die Gasphase in den Lumenkanal beziehungsweise Durchflusskanal 48 der Membran 34 geleitet wird und die wässrige Phase mantelseitig um die Membranen 34 strömt. Um die für die Reaktion mindestens notwendige Temperatur von ca. 75 °C zur Verfügung zu stellen, kann der Polymerisationsreaktor 12 entsprechend temperiert werden. Zum Aufbau des notwendigen Prozessdrucks in der wässrigen Phase, wird hinter dem Reaktorausgang beispielsweise ein proportionales Überstromventil 21 verwendet, wie dies in der Figur 1 gezeigt ist. Grundsätzlich kann eine Temperierung der Polymerisationslösung auf einen Bereich von 50 °C bis 100°C von Vorteil sein.

### Bezugszeichen

- 10: Anordnung
- 12: Polymerisationsreaktor
- 13: Druckregler
- 14: Reservoir
- 16: Tank
- 17: Entgaser
- 18: Tank
- 19: Pumpe
- 20: Filtereinheit
- 21: Überströmventil
- 22: Polymerprodukt
- 24: Filtrat
- 26: Rezyklatstrom
- 28: Spülstrom
- 30: Monomerraum
- 32: Monomerstrom
- 34: Membran
- 36: Polymerisationsraum
- 38: Strom an Polymerisationmedium
- 40: Reaktorgehäuse
- 42: Phasengrenzfläche
- 46: Heizband
- 48: Durchflusskanal
- 50: Deckel
- 51: Dichtung
- 52: Umlenkstruktur

- 53: Dichtung
- 54: Endstück

## Patentansprüche

1. Verfahren zum Herstellen von Polyvinylidenfluorid oder einem Polyvinylienfluorid-Copolymer unter Polymerisation von wenigstens Vinylidenfluorid als Monomer, wobei das Verfahren zumindest die Verfahrensschritte aufweist:
i) Bereitstellen eines kontinuierlich betreibbaren Polymerisationsreaktors (12), wobei der Polymerisationsreaktor (12) einen Monomerraum (30) und einen durch eine Membran (34) von dem Monomerraum (30) getrennten Polymerisationsraum (36) aufweist;
ii) Einleiten von Vinylidenfluorid in den Monomerraum (30) mit einem ersten Druck p₁;
iii) Einleiten einer wässrigen Polymerisationslösung in den Polymerisationsraum (36) mit einem zweiten Druck p₂, wobei
iv) p₁ größer oder gleich oder kleiner ist, wie p₂; wobei
v) das Vinylidenfluorid in die wässrige Polymerisationslösung übergeht und
vi) in dem Polymerisationsraum (36) eine Polymerisation von Vinylidenfluorid zu Polyvinylidenfluorid oder einem Polyvinylienfluorid-Copolymer stattfindet.

2. Verfahren nach Anspruch 1, **dadurch gekennzeichnet, dass** die Membran (34) wenigstens eines von einer Keramik und einem Polymer aufweist, insbesondere wobei die Membran (34) aus einem Material ausgebildet ist, das ausgewählt ist aus der Gruppe bestehend aus Aluminiumoxid, Titandioxid, Zirkondioxid, Polytetrafluorethylen, Polydimethylsiloxan und Polypropylen.

3. Verfahren nach Anspruch 1 oder 2, **dadurch gekennzeichnet, dass** die Verfahrensschritte ii) und iii) derart ausgeführt werden, dass ein gasblasenfreier Eintrag von Monomergas in die wässrige Polymerisationslösung erfolgt.

4. Verfahren nach einem der Ansprüche 1 bis 3, **dadurch gekennzeichnet, dass** eine Druckdifferenz zwischen p₁ und p₂ in einem Bereich liegt von ≤ 2 bar.

5. Verfahren nach einem der Ansprüche 1 bis 4, **dadurch gekennzeichnet, dass** der Druck in dem Polymerisationsreaktor (12) in einem Bereich liegt von ≤ 50 bar.

6. Verfahren nach einem der Ansprüche 1 bis 5, **dadurch gekennzeichnet, dass** der Polymerisationsreaktor (12) eine Mehrzahl von insbesondere in Reihe geschalteter tubulärer Membranen (34) aufweist, die in einem gemeinsamen Reaktorgehäuse (40) angeordnet sind.

7. Verfahren nach einem der Ansprüche 1 bis 6, **dadurch gekennzeichnet, dass** die Membran (34) eine Mehrzahl an insbesondere in Reihe geschalteter Durchflusskanäle (48) aufweist.

8. Verfahren nach einem der Ansprüche 1 bis 7, **dadurch gekennzeichnet, dass** der Polymerisationsreaktor (12) zylinderförmig gewickelt ist, insbesondere wobei wenigstens zwei parallel geschaltete Membranen (34) in dem Polymerisationsreaktor (12) vorliegen.

9. Verfahren nach einem der Ansprüche 1 bis 8, **dadurch gekennzeichnet, dass** in dem Polymerisationsraum (36) eine statische Mischerstruktur angeordnet ist.

10. Verfahren nach einem der Ansprüche 1 bis 9, **dadurch gekennzeichnet, dass** wenigstens eines von der Membran (34) und der Mischerstruktur mit einem Katalysator versehen ist.

11. Verfahren nach einem der Ansprüche 1 bis 10, **dadurch gekennzeichnet, dass** das Verfahren ausgeführt wird frei von Emulgatoren, oder dass das Verfahren ausgeführt wird unter Verwendung von Emulgatoren, die ausgewählt sind aus der Gruppe bestehend aus Meroxapole und Poloxamere.

12. Verfahren nach einem der Ansprüche 1 bis 11, **dadurch gekennzeichnet, dass** die Polymerisationslösung auf eine Temperatur erhitzt wird in einem Bereich von ≥ 50°C bis ≤ 100°C.

13. Verfahren nach einem der Ansprüche 1 bis 12, **dadurch gekennzeichnet, dass** das Verfahren in wenigstens zwei in Reihe geschalteten Polymerisationsreaktoren (12) durchgeführt wird.

14. Verfahren nach einem der Ansprüche 1 bis 13, **dadurch gekennzeichnet, dass** in einem Polymerisationsreaktor (12) zwischen zwei in Reihe geschalteten Membranen (34) oder zwischen zwei in Reihe geschalteten Durchflusskanälen (48) oder zwischen zwei in Reihe geschalteten Polymerisationsreaktoren ein Stoffstrom einbringbar oder ausbringbar ist.

15. Verfahren nach einem der Ansprüche 1 bis 14, **dadurch gekennzeichnet, dass** die den Monomerraum (30) und den Polymerisationsraum (36) trennende Membran hydrophobe Eigenschaften aufweist, oder dass die den Monomerraum (30) und den Polymerisationsraum (36) trennende Membran hydrophile Eigenschaften aufweist.

## Claims

1. Process for producing polyvinylidene fluoride or a polyvinylidene fluoride copolymer by polymerization of at least vinylidene fluoride as monomer, wherein the process comprises at least the process steps of:
i) providing a continuously operable polymerization reactor (12), wherein the polymerization reactor (12) comprises a monomer space (30) and a polymerization space (36) separated from the monomer space (30) by a membrane (34);
ii) introducing vinylidene fluoride into the monomer space (30) at a first pressure p₁;
iii) introducing an aqueous polymerization solution into the polymerization space (36) at a second pressure p₂, wherein
iv) p₁ is greater than or equal to or less than p₂; wherein
v) the vinylidene fluoride passes into the aqueous polymerization solution and
vi) a polymerization of vinylidene fluoride to afford polyvinylidene fluoride or a polyvinylidene fluoride copolymer occurs in the polymerization space (36).

2. Process according to claim 1, **characterized in that** the membrane (34) comprises at least one of a ceramic and a polymer, particularly wherein the membrane (34) is made of a material selected from the group consisting of aluminium oxide, titanium dioxide, zirconium dioxide, polytetrafluoroethylene, polydimethylsiloxane and polypropylene.

3. Process according to claim 1 or 2, **characterized in that** process steps ii) and iii) are carried out in such a way that gas bubble-free introduction of monomer gas into the aqueous polymerization solution is effected.

4. Process according to any of claims 1 to 3, **characterized in that** a pressure difference between p₁ and p₂ is in a range of ≤ 2 bar.

5. Process according to any of claims 1 to 4, **characterized in that** the pressure in the polymerization reactor (12) is in a range of ≤ 50 bar.

6. Process according to any of claims 1 to 5, **characterized in that** the polymerization reactor (12) comprises a plurality of in particular serially connected tubular membranes (34) arranged in a common reactor housing (40).

7. Process according to any of claims 1 to 6, **characterized in that** the membrane (34) comprises a plurality of in particular serially connected flow channels (48).

8. Process according to any of claims 1 to 7, **characterized in that** the polymerization reactor (12) has a cylindrically wound configuration, in particular wherein at least two membranes (34) connected in parallel are present in the polymerization reactor (12).

9. Process according to any of claims 1 to 8, **characterized in that** the polymerization space (36) has a static mixer structure arranged in it.

10. Process according to any of claims 1 to 9, **characterized in that** at least one of the membrane (34) and the mixer structure has been provided with a catalyst.

11. Process according to any of claims 1 to 10, **characterized in that** the process is carried out in the absence of emulsifiers, or **in that** the process is carried out using emulsifiers selected from the group consisting of meroxapols and poloxamers.

12. Process according to any of claims 1 to 11, **characterized in that** the polymerization solution is heated to a temperature in a range from ≥ 50°C to ≤ 100°C.

13. Process according to any of claims 1 to 12, **characterized in that** the process is performed in at least two serially connected polymerization reactors (12).

14. Process according to any of claims 1 to 13, **characterized in that**, in a polymerization reactor (12), a material stream is introducible or dischargeable between two serially connected membranes (34) or between two serially connected flow channels (48) or between two serially connected polymerization reactors.

15. Process according to any of claims 1 to 16, **characterized in that** the membrane separating the monomer space (30) and the polymerization space (36) exhibits hydrophobic properties, or **in that** the membrane separating the monomer space (30) and the polymerization space (36) exhibits hydrophilic properties.

## Revendications

1. Procédé de préparation de poly(fluorure de vinylidène) ou d'un copolymère de poly(fluorure de vinylidène) par polymérisation au moins de fluorure de vinylidène en tant que monomère, le procédé comprenant au moins les étapes de procédé :
i) fourniture d'un réacteur de polymérisation (12) fonctionnant en continu, le réacteur de polymérisation (12) présentant une chambre à monomères (30) et une chambre de polymérisation (36) séparée par une membrane (34) de la chambre à monomères (30) ;
ii) introduction de fluorure de vinylidène dans la chambre à monomères (30) à une première pression p₁ ;
iii) introduction d'une solution aqueuse de polymérisation dans la chambre de polymérisation (36) à une deuxième pression p₂,
(iv) p₁ étant supérieur ou égal ou inférieur à p₂ ;
v) le fluorure de vinylidène passant dans la solution aqueuse de polymérisation et
vi) une polymérisation du fluorure de vinylidène en poly(fluorure de vinylidène) ou en un copolymère de poly(fluorure de vinylidène) ayant lieu dans la chambre de polymérisation (36).

2. Procédé selon la revendication 1, **caractérisé en ce que** la membrane (34) présente au moins un élément parmi une céramique et un polymère, en particulier la membrane (34) étant formée d'un matériau choisi dans le groupe constitué par l'oxyde d'aluminium, le dioxyde de titane, le dioxyde de zirconium, le polytétrafluoroéthylène, le polydiméthylsiloxane et le polypropylène.

3. Procédé selon la revendication 1 ou 2, **caractérisé en ce que** les étapes de procédé ii) et iii) sont mises en œuvre de telle sorte que l'entrée de monomères gazeux dans la solution aqueuse de polymérisation s'effectue sans bulles de gaz.

4. Procédé selon l'une des revendications 1 à 3, **caractérisé en ce qu'**une différence de pression entre p₁ et p₂ se situe dans une plage ≤ 2 bars.

5. Procédé selon l'une des revendications 1 à 4, **caractérisé en ce que** la pression dans le réacteur de polymérisation (12) se situe dans une plage ≤ 50 bars.

6. Procédé selon l'une des revendications 1 à 5, **caractérisé en ce que** le réacteur de polymérisation (12) présente plusieurs membranes (34) tubulaires en particulier raccordées en série, qui sont disposées dans un boîtier de réacteur (40) commun.

7. Procédé selon l'une des revendications 1 à 6, **caractérisé en ce que** la membrane (34) présente plusieurs canaux d'écoulement (48) en particulier raccordés en série.

8. Procédé selon l'une des revendications 1 à 7, **caractérisé en ce que** le réacteur de polymérisation (12) est enroulé de façon cylindrique, en particulier au moins deux membranes (34) raccordées en parallèle étant présentes dans le réacteur de polymérisation (12).

9. Procédé selon l'une des revendications 1 à 8, **caractérisé en ce qu'**une structure de mélangeur statique est disposée dans la chambre de polymérisation (36).

10. Procédé selon l'une des revendications 1 à 9, **caractérisé en ce qu'**au moins un élément parmi la membrane (34) et la structure de mélangeur est pourvu d'un catalyseur.

11. Procédé selon l'une des revendications 1 à 10, **caractérisé en ce que** le procédé est mis en œuvre sans émulsifiants ou **en ce que** le procédé est mis en œuvre avec utilisation d'émulsifiants choisis dans le groupe constitué par les meroxapols et les poloxamères.

12. Procédé selon l'une des revendications 1 à 11, **caractérisé en ce que** la solution de polymérisation est chauffée à une température dans une plage ≥ 50°C à ≤ 100°C.

13. Procédé selon l'une des revendications 1 à 12, **caractérisé en ce que** le procédé est réalisé dans au moins deux réacteurs de polymérisation (12) raccordés en série.

14. Procédé selon l'une des revendications 1 à 13, **caractérisé en ce qu'**un flux de matière peut être introduit dans un réacteur de polymérisation (12) ou évacué de celui-ci entre deux membranes (34) raccordées en série ou entre deux canaux d'écoulement (48) raccordés en série ou entre deux réacteurs de polymérisation raccordés en série.

15. Procédé selon l'une des revendications 1 à 14, **caractérisé en ce que** la membrane séparant la chambre à monomères (30) et la chambre de polymérisation (36) présente des propriétés hydrophobes ou **en ce que** la membrane séparant la chambre à monomères (30) et la chambre de polymérisation (36) présente des propriétés hydrophiles.
